# EUROPEAN PATENT APPLICATION

(11) **EP 4 353 506 A1**
(43) Date of publication of application: **17.04.2024**
(21) Application number: 23196420.6
(22) Date of filing: 09.09.2023
(51) Int. Cl.: B60J 10/24, B60J 10/82, B60J 7/00

(54) **SUNROOF DEVICE**

(30) Priority: 11.10.2022 US 202263415065 P
(71) Applicant: Fuzhou Mingfang Automobile Parts Industry Co., Ltd., Fuzhou, Fujian (CN); Hsin Chong Machinery Works Co., Ltd., Taoyuan City 335 (TW)
(72) Inventor: CHIU, Tzu-Heng, 335 Taoyuan City (TW); LAN, Yi-Jen, 335 Taoyuan City (TW); DAYOUB, Karim, 335 Taoyuan City (TW); PELINO, Chris., 335 Taoyuan City (TW)
(74) Representative: 2K Patentanwälte Blasberg Kewitz & Reichel

(57) **Abstract**

A sunroof device which includes a roof (100), a roof frame (200), a window plate assembly (300), and a pair of link assemblies (400). The roof (100) is disposed with an opening (101). The roof frame (200) is attached to the roof (100) corresponding to the opening (101) and includes a pair of sliding rails (210) separately arranged corresponding to two sides of the opening (101). An outline of the roof frame (200) is non-matched with an outline of the opening (101). The window plate assembly (300) is connected on the pair of sliding rails (210). An outline of the window plate assembly (300) is matched with the outline of the opening (101). A periphery of the window plate assembly (300) is disposed with a waterproof strip (330) abutting against an inner edge of the opening (101). Each link assembly (400) is disposed on corresponding one of the sliding rails (210) and is connected to the window plate assembly (300).

## Description

### BACKGROUND

### Technical Field

The disclosure relates to a vehicle sunroof, particularly to a sunroof device which easily adapts design changes of an opening.

### Related Art

A sunroof includes a movable window plate disposed in an opening in a vehicle roof. Sliding rails are provided under the roof and are disposed with linking rods. The linking rods are slidable along the sliding rails and connected to the window plate. Thus, the window plate may be moved vertically and horizontally. A rubber strip must be disposed between the window plate and an inner edge of the opening for sealing. The rubber strip is disposed on a protrusion structure of the sliding rails. However, when the shape design of the opening changes, shapes of both the window plate and the sliding rails must be changed correspondingly. Thus, such a design change is not easy.

In view of this, the inventors have devoted themselves to the above-mentioned related art, researched intensively and cooperated with the application of science to try to solve the above-mentioned problems. Finally, the invention which is reasonable and effective to overcome the above drawbacks is provided.

### SUMMARY

The disclosure provides a sunroof device which includes a roof, a roof frame, a window plate assembly, and a pair of link assemblies. The roof is disposed with an opening. The roof frame is attached to the roof corresponding to the opening and includes a pair of sliding rails separately arranged corresponding to two sides of the opening. An outline of the roof frame is non-matched with an outline of the opening. The window plate assembly is connected on the pair of sliding rails. An outline of the window plate assembly is matched with the outline of the opening. A periphery of the window plate assembly is disposed with a waterproof strip abutting against an inner edge of the opening. The pair of link assemblies are arranged corresponding to the pair of sliding rails. Each link assembly is disposed on corresponding one of the sliding rails to be slidable along corresponding one of the sliding rails. Each link assembly is connected to the window plate assembly.

In an embodiment of the disclosure, the waterproof strip is of a hollow tubular shape.

In an embodiment of the disclosure, the window plate assembly includes a glass plate and a frame body, the frame body is disposed around a periphery of the glass plate, and the waterproof strip is attached on an outer edge of the frame body. Each link assembly is connected to the frame body. An outer edge of the frame body is formed with a channel trough extending along an outer edge of the frame body. The waterproof strip is disposed in the channel trough. An embedding groove is defined in the channel trough. A side of the waterproof strip is protruded with an embedding strip engaged in the embedding groove. The embedding strip is of a hollow tubular shape.

In an embodiment of the disclosure, the pair of sliding rails and the opening are arranged at an interval. The roof frame and the opening are arranged at an interval.

In an embodiment of the disclosure, each sliding rail includes a drain trough. The frame body includes a guiding plate corresponding to the drain trough. Each guiding plate extends into corresponding one of the drain troughs.

In an embodiment of the disclosure, each sliding rail includes a sliding trough. Each link assembly is connected to corresponding one of the sliding troughs.

In the sunroof device of the disclosure, the waterproof strip is disposed on the window plate assembly. When the shape design of the opening changes, only the shapes of the glass plate and the frame body need to be changed and the shape of the sliding rails does not need to be changed, so that the sunroof device of the disclosure may easily adapt the shape change of the opening, this makes the design and manufacture more flexible.

### BRIEF DESCRIPTION OF THE DRAWINGS

FIGS. 1 and 2 are exploded schematic views of the window plate assembly of the disclosure;
FIG. 3 is an exploded cross-sectional view of the window plate assembly of the disclosure;
   and
FIGS. 4 and 5 are assembled cross-sectional views of the window plate assembly of the disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

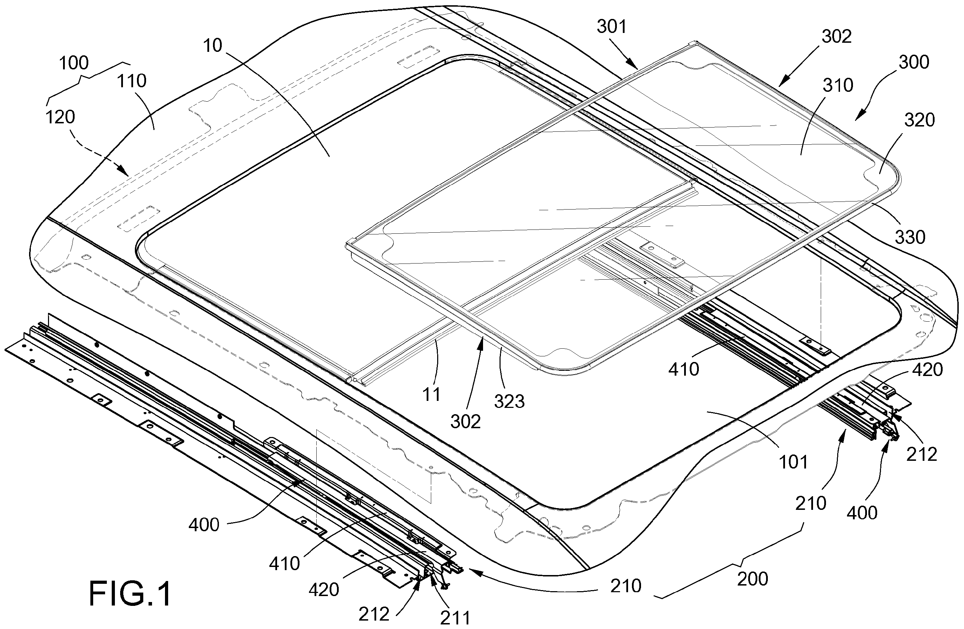

Please refer to FIG. 1. An embodiment of the disclosure provides a sunroof device which includes a roof 100, a roof frame 200, a window plate assembly 300 and a pair of link assemblies 400.

The roof 100 is a metal plate which is horizontally arranged. The roof 100 is disposed with an opening 101. In detail, the roof 100 may include a roof plate 110 and a reinforcement frame 120. The opening 101 is formed on the roof plate 110. The reinforcement frame 120 is disposed inside the roof plate 110 corresponding to the opening 101 and may be directly welded to the roof plate 110.

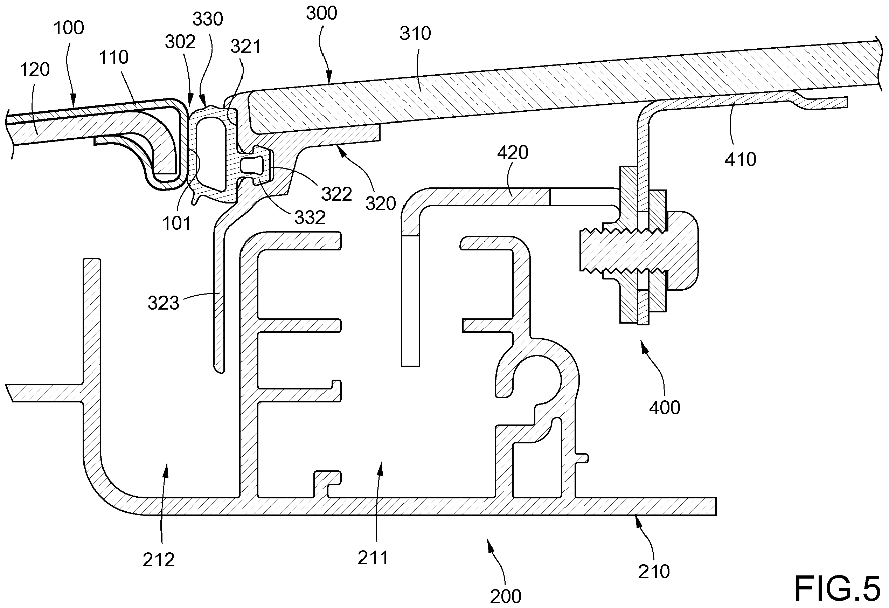

Please refer to FIGS. 1 and 5. The sunroof device of the disclosure relates to a sunroof device installed under a roof. The roof frame 200 is attached under the roof 100 corresponding to the opening for installing the window plate assembly 300 thereon. In detail, the roof frame 200 is connected to the reinforcement frame 120. The roof frame 200 at least includes a pair of sliding rails 210 and may include other parts (such as a front frame and a rear frame connected between the sliding rails 210) for fixing the sliding rails 210 in the roof 100. The disclosure does not limit forms of the roof frame 200 and other parts. The embodiment only depicts the pair of sliding rails 210 and other parts are omitted. The pair of sliding rails 210 are separately arranged corresponding to two sides of the opening 101. The pair of sliding rails 210 and the opening 101 are arranged at an interval. In detail, the whole roof frame 200 and the opening 101 are arranged at an interval. An outline of the roof frame 200 is non-matched with an outline of an inner edge of the opening 101. The outline being non-matched indicates that the outlines of a part of each of two elements are shaped in different curves. Each sliding rail has a sliding trough 211 and a drain trough 212, which are parallelly arranged and are separately extended along a longitudinal direction of the sliding rails 210.

The window plate assembly 300 is movably disposed in the opening 101 and covers at least a part of the opening 101. In the embodiment, a fixed window plate 10 is disposed in the opening 101. The fixed window plate 10 is fixedly disposed in the opening 101. The window plate assembly 300 and the fixed window plate 10 separately cover two halves of the opening 101. The fixed window plate 10 covers a half of the opening 101, and the movable window plate assembly 300 may be moved close to the fixed window panel 10 to cover the other half of the opening 101 and close the opening 101. In detail, an outline of a rear edge 301 of the movable window plate assembly 300 is matched with an outline of a front edge 11 of the fixed window plate 10 for closing together, and outlines of the movable window assembly 300 and the rest of the fixed window plate 10 are matched with outlines of an inner edge and the connected portion of the opening 101, respectively. The outline is matched in a manner that the outlines of a part of each of two elements are shaped in the same curve or a corresponding curve with slightly different proportion, so that the two elements may be brought together with each other to be connected. When the window plate assembly 300 closes the opening 101, its two sides 302 abut against two sides of an inner edge of the opening 101 in the roof plate 110.

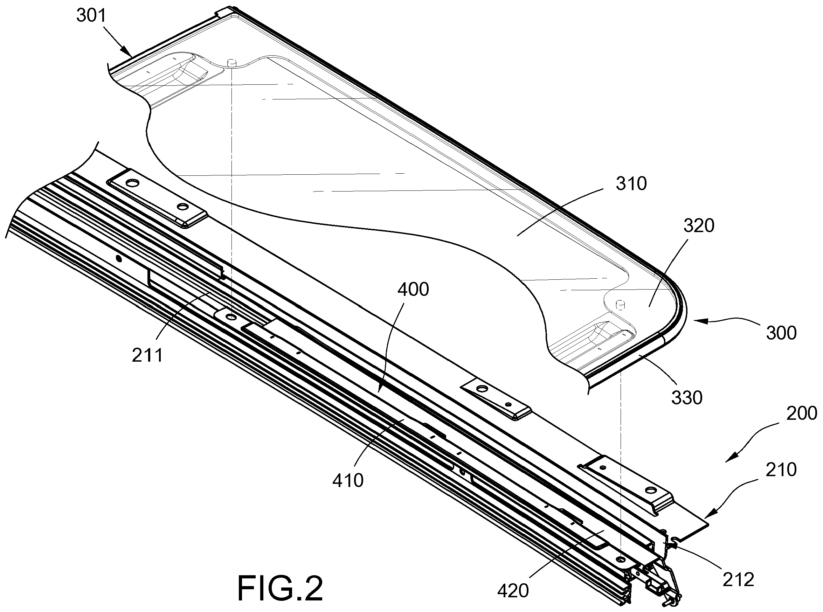

Please refer to FIGS. 2-4. In the embodiment, the window plate assembly 300 has a glass plate 310, a frame body 320 and a waterproof strip 330 abutting against an inner edge of the opening. The glass plate 310 is of a substantially rectangular shape. The frame body 320 is made of, but not limited to, a rigid plastic material (such as polyurethane (PU)). The frame body 320 is disposed around a periphery of the glass plate 310.

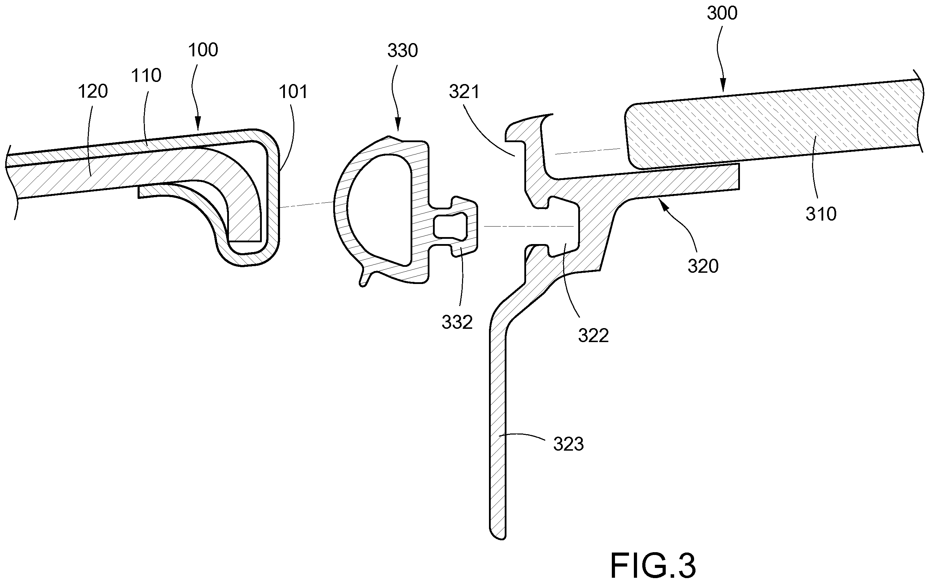

Please refer to FIGS. 3-4. In the embodiment, an outer edge of the frame body 320 is formed with a channel trough 321 extending along an outer edge of the frame body 320, and the waterproof strip 330 is disposed in the channel trough 321. An embedding groove 322 is defined in the channel trough 321. A side of the waterproof strip 330 is protruded with an embedding strip 332 engaged in the embedding groove 322. The embedding strip 332 is of a hollow tubular shape to be easily engaged in the embedding groove 322.

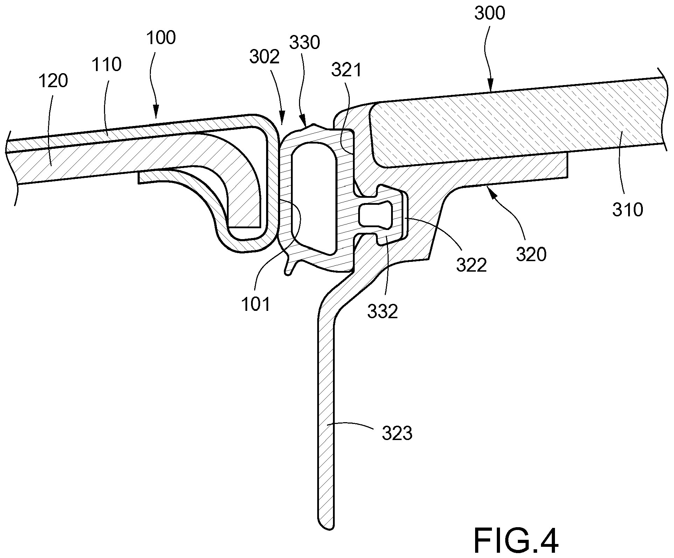

Please refer to FIGS. 4-5. In the embodiment, each of two lateral edges of the window plate assembly 300 is downward extended with a guiding plate 323 from the frame body 320 corresponding to each drain trough 212, and each guiding plate 323 extends into corresponding one of the drain troughs 212. Water infiltrating into the opening 101 may be guided by the guiding plate 323 to the drain troughs 212 to be further drained out to avoid accumulating water in the sliding trough 211.

Please refer to FIGS. 1, 2 and 5. The pair of link assemblies 400 are arranged corresponding to the pair of sliding rails 210. Each link assembly 400 is disposed on corresponding one of the sliding rails 210 to be slidable along corresponding one of the sliding rails 210. In detail, each link assembly 400 is connected to corresponding one of the sliding troughs 211 and is connected to the window plate assembly 300. In detail, each link assembly 400 includes a bracket 410 and multiple link rods 420. The bracket 410 is pivoted to the link rod 420. Each bracket 410 is connected to the window plate assembly 300. The bracket 410 is connected to corresponding one of the sliding rails 210 through the link rod 420. At least part of the link rods 420 of each link assembly 400 separately penetrate into the sliding trough 211 of corresponding one of the sliding rails 210 to make each link assembly 400 slidable along corresponding one of the sliding rails 210. The window plate assembly 300 is slidable along each sliding rail 210 by the link assembly 400.

In the sunroof of the disclosure, the waterproof strip 330 is disposed on the window plate assembly 300. The roof frame 200 and the opening 100 are arranged at an interval. An outline of the roof frame 200 does not need to be matched with an outline of the opening 101. When the shapes of the roof plate 110 and the opening 101 are changed corresponding to different vehicle models, only the shapes of the glass plate 310 and the frame body 320 need to be changed and they are connected to the link rods 420 through corresponding bracket 410, so that the shape of the sliding rail 210 and the structure of the link 420 do not need to be changed. As a result, when the sunroof device of the disclosure is changed corresponding to different vehicle models, only few parts need to be changed, this makes the design and manufacture more flexible and adaptive.

## Claims

1. A sunroof device comprising:
a roof (100), comprising an opening (101);
a roof frame (200), attached to the roof (100) corresponding to the opening (101), comprising a pair of sliding rails (210) separately arranged corresponding to two sides of the opening (101), and an outline of the roof frame (200) non-matched with an outline of the opening (101);
a window plate assembly (300), connected on the pair of sliding rails (210), an outline of the window plate assembly (300) matched with the outline of the opening (101), and comprising a waterproof strip (330) disposed on a periphery thereof and abutting against an inner edge of the opening (101); and
a pair of link assemblies (400), arranged corresponding to the pair of sliding rails (210), each link assembly (400) correspondingly disposed on each sliding rail (210) and slidable along each sliding rail (210), and each link assembly (400) connected to the window plate assembly (300).

2. The sunroof device of claim 1, wherein the waterproof strip (330) is of a hollow tubular shape.

3. The sunroof device of claim 1, wherein the window plate assembly (300) comprises a glass plate (310) and a frame body (320), the frame body (320) is disposed around a periphery of the glass plate (310), and the waterproof strip (330) is attached on an outer edge of the frame body (320).

4. The sunroof device of claim 3, wherein each link assembly (400) is connected to the frame body (320).

5. The sunroof device of claim 3, wherein a channel trough (321) is disposed on the outer edge of the frame body (320) and extends along the outer edge of the frame body (320), and the waterproof strip (330) is disposed in the channel trough (321).

6. The sunroof device of claim 5, wherein an embedding groove (322) is defined in the channel trough (321), and an embedding strip (332) is disposed protrusively on a side of the waterproof strip (330) and engaged in the embedding groove (322).

7. The sunroof device of claim 6, wherein the embedding strip (332) is of a hollow tubular shape.

8. The sunroof device of claim 1, wherein the pair of sliding rails (210) and the opening (101) are arranged spacedly.

9. The sunroof device of claim 1, wherein the roof frame (200) and the opening (101) are arranged spacedly.

10. The sunroof device of claim 3, wherein each sliding rail (210) comprises a drain trough (212), the frame body (320) comprises a guiding plate (323) disposed corresponding to the drain trough (212), and the guiding plate (323) is extended to the drain troughs (212) correspondingly.

11. The sunroof device of claim 1, wherein each sliding rail (210) comprises a sliding trough (211), and each link assembly (400) is connected to the sliding troughs (211) correspondingly.
